# EUROPEAN PATENT SPECIFICATION

(11) **EP 2 698 035 B1**
(45) Date of publication and mention of the grant of the patent: **30.12.2015**
(21) Application number: 12719301.9
(22) Date of filing: 13.04.2012
(51) Int. Cl.: H04W 72/10, H04W 76/06, H04W 48/10, H04W 72/04, H04W 84/10, H04W 84/16, H04W 92/10, H04W 92/12, H04W 84/04

(54) **PROVIDING LOCAL SERVICES AND PUBLIC SERVICES USING A PRIVATE CELL**
BEREITSTELLUNG LOKALER DIENSTE UND ÖFFENTLICHER DIENSTE ANHAND DER VERWENDUNG EINER PRIVATEN ZELLE
FOURNITURE DE SERVICES LOCAUX ET DE SERVICES PUBLICS AU MOYEN D'UNE CELLULE PRIVÉE

(30) Priority: 13.04.2011 GB 201106263
(43) Date of publication of application: 19.02.2014
(73) Proprietor: Druid Software Limited, Bray, County Wicklow (IE)
(72) Inventor: KENNY, Liam, Dublin (IE)
(74) Representative: O'Connor, Michael Donal
(86) International application number: PCT/EP2012/056853
(87) International publication number: WO 2012/140245

(56) References cited:
- WO-A2-2010/117227
- US-A1- 2001 046 859
- US-A1- 2003 100 342
- JOERG SWETINA (NEC): "Discussion document on Enterprise H(e)NB Subsystem", 3GPP DRAFT; S1-100068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. SanFrancisco; 20100222, 10 February 2010 (2010-02-10), XP050431586, [retrieved on 2010-02-10]
- YI-BING LIN ET AL: "Reducing Call Routing Cost for Femtocells", IEEE TRANSACTIONS ON WIRELESS COMMUNICATIONS, IEEE SERVICE CENTER, PISCATAWAY, NJ, US, vol. 9, no. 7, 1 July 2010 (2010-07-01), pages 2302-2309, XP011313049, ISSN: 1536-1276

## Description

### Introduction

This invention relates to a method of operating a communication network and a network component for providing mobile subscribers with both local services of a local communication network and public services of a public radio access network (RAN) using a private cell or group of private cells connected to a Mobile Network Operator' RAN.

Throughout this specification, reference will be made to a private cell. It will be understood that a private cell is intended to mean a 2G/3G picocell, a femtocell or like cell typically installed indoors in a building such as, but not limited to, an office building, a factory, a warehouse or a hospital.

It is highly desirable to provide mobile subscribers with both local services of a local communication network and public services of a Mobile Network Operator (MNO) RAN. By doing so, the mobile subscriber is able to use their mobile handset to make and receive calls, send and receive SMS messages and other data to and from third parties on the MNO's RAN. The mobile subscriber is also able to use their mobile handset to make and receive calls, send and receive SMS messages and other data to and from third parties over the local communication network.

Effectively, the mobile subscriber's mobile handset becomes an extension of the local communication network and enables the mobile subscriber to use their mobile handset to receive calls routed through the local communication network, transfer calls internally to other extension numbers in the local communication network, access voice mail messages on the local communication network, send and receive SMS, MMS and data, make and receive internal calls to and from other extensions on the local communication network and avail of the other benefits of being on the local communication network without having to use their desk handset.

Heretofore, two solutions have been proposed to provide local mobile subscribers with the ability to access local communication networks. The first solution entails providing access to the local services via the GSM or 3G core network by replicating the services of PABXs via the operator core network. The second approach entails providing handset applications that access local networks over a WiFi or other auxiliary radio link. Although these solutions provide a degree of integration with the local communication network, there are problems with both of these solutions.

In relation to the first solution whereby access is implemented via the GSM or 3G network, this solution may be relatively expensive to implement and inherently cannot guarantee the required levels of service required by many mobile subscribers. The MNO RAN operator must allocate substantial time and resources to implement and maintain such a solution and these result in a significant cost to the operator. More importantly though, is the inability of such solutions to provide the desired guaranteed level of service to mobile subscribers. If the connection to the GSM or 3G network is lost or there is no communication channel available, the mobile subscriber will be unable to avail of any of the local communication network services. This is highly unsatisfactory particularly in those situations where it is critical to ensure that a message or call is put through to the mobile subscriber immediately. Accordingly, these systems have been unsuccessful in their attempt to dislodge the known non-integrated systems from their dominant position in the market.

In relation to the second solution whereby access is implemented using a WiFi connection, this solution has also proven to be relatively unsuccessful at supplanting the existing systems. This is partially due to the fact that each handset type typically requires a dedicated application suitable for that make and model of handset. This results in a solution that can be inconvenient and difficult to implement particularly across a large organisation. Secondly, an additional radio interface, such as WiFi, is required and this radio interface is not generally designed to deliver voice service especially with mobility across a number of local base transceiver stations, with poor performance during handover between transceivers, poor quality during congestion on Wifi access points and poor power management of handset transmissions resulting in a reduction of battery life.

Various attempts have been made to provide more robust fixed mobile convergence solutions. For example, US2010/0080198 in the name of ADC Telecommunications, Inc. describes a method and system in which a private BTS of a private cellular system is used to provide both private cellular services and public cellular services to a registered user's device within the coverage area of the private BTS. During the time that the registered user's device is within the coverage area of the private BTS, both the public number and the private number of the registered user's device will function. The communication device will be able to make mobile originated calls and receive mobile terminated calls using the public cellular number and also use supplementary services, voice messaging services and SMS services provided by the public network. Furthermore, the communication device will also be able to work in the private cellular network to make mobile originated calls and receive mobile terminated calls using the private cellular number and also use supplementary services, voice messaging services and SMS services provided by the private cellular network. Both registered users and unregistered users are able to access the public cellular network through the private BTS and therefore the method described would not appear to be able to provide a guaranteed level of service that may be required by certain users of the system.

WO2010/117227 in the name of Samsung Electronics Co Ltd describes a method and system for performing access control and a radio resource management entity. The hybrid radio resource management entity is notified by either a network-side mobile management entity (MME) or by user equipment whether or not the user equipment is part of a closed subscriber group (CSG). Access to a home base station (HeNB) may be dependent on whether or not the user equipment (UE) is part of the CSG. If the system exceeds a given traffic threshold, non-CSG UE may be disconnected from the HeNB in favour of CSG UE.

The document entitled "Discussion document on Enterprise H(e)NB Subsystem" by Joerg Swetina from 3GPP Draft; S1-100068, 3^{rd} Generation Partnership Project (3GPP) discusses possible directions that the standards for 3G should take.

It is an object of the present invention to provide a method of operating a communication network according to independent claim 1, that overcomes at least some of the problems with the known systems and product offerings.

### Statements of Invention

According to the invention there is provided a method of operating a communication network comprising a Mobile Network Operator (MNO) Radio Access Network (RAN), a private cell, a local communication network, and a network component intermediate the MNO RAN, the private cell and the local communication network, the method comprising the steps of:
the network component assuming control of a broadcast channel of the private cell;
the network component controlling any dedicated channel set up using the private cell including routing any communications on the dedicated channel to one of the local communication network and the MNO RAN;
the network component checking whether a communication service request is to or from a registered user of the local communication network;
the network component routing the service request accordingly depending on whether the service request is to or from a registered user; and in which on the network component determining that the communication service request is to or
from a registered user of the local communication network and there are no available channels for routing the communication service request to or from the registered user, the network component carries out the steps of:
   selecting a communication channel currently in use by a non-registered user;
   disconnecting the communication channel of the non-registered user; and
   fulfilling the communication service request of the registered user over that communication channel.

By having such a method, it will be possible to provide a guaranteed level of service to the registered users of the local communication network. This is due to a number of factors. First of all, the communications will not be dependent on the communication link to the MNO's RAN and the local communication network will continue to operate even when the link to the MNO's RAN is down. More importantly though, in the method according to the invention, communications of unregistered users may be dropped in favour of communications of registered users of the system. The communication channel thereby freed up can then be allocated to the registered user of the system. This will ensure that urgent communications can be routed through to the registered users in cases where there is congestion due to non-registered users and will provide the desired guaranteed level of service necessary in many applications where heretofore this presented a significant obstacle to implementing such a system.

In addition to the above benefits, advantageously, the local communication network traffic can be routed through the local communication network as opposed to the MNO's network thereby reducing traffic and cost of delivery of the service. Importantly, the method according to the invention may be performed locally and does not require the MNO to provide a centrally managed node. Effectively, the broadcast channel of the private cell's radio node is being shared between the MNO and the local communication network (for example a PBX) thereby allowing the mobile terminal to camp on two networks instead of camping on a single network as it normally does. This facilitates routing of communications through either the MNO RAN or the local communication network. Assuming control of the broadcast channel entails intercepting messages on the uplink and downlink broadcast channels, and routing, terminating or originating new messages depending on the specific case. Furthermore, "assuming control" of dedicated channels will entail intercepting messages on the uplink and downlink dedicated channels, and routing, terminating or originating new messages depending on the specific case.

Furthermore, if the service request is to or from a registered user of the system, the service request can be routed through the MNO RAN or through the local communication network. The choice will also depend on the nature of the service request (e.g. a call to another registered user in the building or a call to a third party with no presence on the local network, the tariffs charged for routing the call, the congestion of the network and the like).

In one embodiment of the invention there is provided a method of operating a communication network in which if the communication service request is to or from a registered user, the network component checks the profile of the registered user and thereafter routes the service request accordingly.

In one embodiment of the invention there is provided a method of operating a communication network in which on the network component determining from the profile of the registered user that the registered user is a VIP user of the communication network and there are no available channels for routing the communication service request to or from the VIP registered user, the network component carries out the steps of:
selecting a communication channel currently in use by one of a non-registered user or a non-VIP registered user;
disconnecting the communication channel of the non-registered user or non-VIP registered user; and
fulfilling the communication service request of the VIP registered user over that communication channel.

By having such a method, communications to and from certain individuals (for example a surgical team in a hospital) will always be given priority and this will ensure a guaranteed level of service is provided to these users. This will facilitate the replacement of other pager systems and the like as the method according to the present invention provides a sufficiently robust method that will ensure communications to certain individuals will always be delivered. If desired, several distinct levels of priority may be supported and each user will be assigned a level so that users with a higher priority level will receive and be able to send their communications in preference over lower priority level users.

In one embodiment of the invention there is provided a method of operating a communication network in which the network component checks the status of a link to the MNO RAN and thereafter routes a communication service request accordingly.

If the link to the MNO RAN is down, all communications from registered users may be routed through a local PBX. Furthermore, all communications from non-registered users may be suspended thereby saving the communication channels for the registered users until such time that the communication link to the MNO RAN is restored.

In one embodiment of the invention there is provided a method of operating a communication network in which the network component checks the status of a link to the local communication system and thereafter routes a communication service request accordingly. Alternatively, the network component may check one or more of the called number, the calling number, the IMSI, and whether the number is a local number or not and thereafter routing the communication service request accordingly.

In this way, it will be possible to provide greater fixed mobile convergence and an enhanced level of service to the users of the system. This is a very important aspect of the present invention. For example, by implementing such a system, it will be possible to route the calls from a mobile subscribers device through the local communication network and it will appear to the other party on the call that the mobile subscriber is calling or being called from an extension of the local communication network. If the mobile subscriber is in the building it will not be necessary to contact them over the MNO network but instead they can be contacted over the local communication network. Furthermore, this will allow for access of other services such as data and SMS particular to the local communication network by a user operating the mobile subscriber device and they will not have to use a dedicated handset such as a desktop phone in order to access these services. Furthermore, there will be a relatively seamless transition and no action is required by the mobile subscriber device user to avail of the services.

In another embodiment, the network component may check a part of, or in other words a subset of, any one of the calling number, the called number and the IMSI and thereafter route the communication service request accordingly. By doing so, this may enable the method to route calls according to whether or not the subscriber is from a particular network or whether the number has a certain prefix or starts with a certain number, for example. This will provide useful flexibility in the routing of calls.

In one embodiment of the invention, the method comprises the step of the network component checking a current attachment status of the subscriber and routing a communication request accordingly. In this way, calls may be routed depending on whether or not the mobile subscriber is currently on site or not. This can be determined by the attachment status of the subscriber.

In one embodiment of the invention, the method comprises the step of the network component checking whether the subscriber is a local registered subscriber and routing a communication request accordingly.

In one embodiment of the invention, the method comprises the step of the network component checking a priority level of the subscriber and routing a communication request accordingly.

In one embodiment of the invention, the method comprises the step of the network component checking a TCP/IP header field and routing a communication request accordingly. For example, the destination address, the source address, the port, the protocol type and the like may be used to determine how to route the communication request.

In one embodiment of the invention, the method comprises the step of the network component checking an IMEI or a subset of the IMEI of a device making or receiving a communication request and routing the communication request accordingly. In this way, certain types of devices such as iPhones and the like will be selectable through a routing rule which is advantageous for the routing of communications to one or more individuals with those devices.

In one embodiment of the invention, the method comprises the step of the network component checking the current location of a subscriber and routing a communication request accordingly. This is in addition to checking whether or not the user is on site or not. In this case, the decision on how to route the communications may be made depending on which local cell the mobile subscriber is presently on.

In one embodiment of the invention, the method comprises the step of the network component checking subscriber data and routing a communication request accordingly. For example, the subscriber data may comprise call forwarding status of the mobile subscriber and this may be implemented by the network component according to the method.

According to the invention there is provided a network component for providing mobile subscribers with both local services of a local communication network and public services of a Mobile Network using a private cell connected to the Mobile Network Operator (MNO) RAN, the network component comprising:
a RAN client module for communication with a controlling node of the MNO RAN;
a RAN server module for communication with and control of a radio node of the private cell;
a private mobile network module for the provision of local communication network services using the private cell;
a service routing module in communication with the RAN client module, the RAN server module and the private mobile network module, the service routing module configured to evaluate a service request and thereafter route the service request through one of the local communications network and the MNO's RAN; and
in which the private mobile network module comprises a mobile switching centre (MSC) component and a home location registry (HLR) component.

By having the MSC and the HLR components, the network component will be able to provide a guaranteed level of service to the registered users and/or the VIP registered users of the system. The HLR will comprise a subscriber table in which case it will be possible to categorise each of the local mobile subscribers and provide access to the services according to the local mobile subscriber's profile in the HLR subscriber table. The MSC will be used in call set up and termination.

Furthermore, it will be possible to provide voice communications over the local network to the local users. This will be achieved even when the connection to the MNO RAN is unavailable. By having such a network component, it will be possible to provide access to local services to local mobile subscribers using standard GSM or 3G radio technology. It is not necessary to implement alternative more expensive and labour intensive solutions that require reconfiguration of the Mobile Network Operator's core network or solutions that require dedicated handset applications and additional radio interfaces. Furthermore, by having such a network component, it is possible to provide guaranteed service levels to the local users when they are connected to the local cells as the local communication network will continue to operate when the connection to the Mobile Network Operator's RAN is unavailable.

In one embodiment of the invention the private mobile network module includes a private branch exchange (PBX) interface component. By having a PBX interface component, the network component can be integrated into the PBX and the mobile subscriber can be treated as an extension of the PBX. Furthermore, the other services available to the users of the PBX, for example voicemail, will be available to the mobile subscriber. It is possible to map the properties of the mobile subscriber onto their desktop handset and in this way, it will be possible to display whether a particular user is unavailable due to the fact that they are on either their mobile or desktop handset. In addition to the above, the call switching function can be delegated to the external PBX instead of being performed by the MSC.

In one embodiment of the invention the private mobile network module includes a short message service centre (SMSC) component.

In one embodiment of the invention the private mobile network module includes a hypertext transfer protocol (HTTP) interface component. The HTTP interface permits interaction with back office systems and allows the back office applications to send messages to local mobile subscribers. Furthermore, the HTTP interface permits network component management and reporting of system events to remote locations.

In one embodiment of the invention the private mobile network module includes a GPRS support node (GSN) component. This will permit data communications between local users and to local IP systems such as email, intranet, the corporate LAN, and the like.

In one embodiment of the invention the operation of the GSN component is transparent to the MNO RAN.

In one embodiment of the invention the private mobile network module includes a visitor location register (VLR).

In one embodiment of the invention there is further provided an operations and maintenance (O&M) module.

In one embodiment of the invention the MNO RAN is one of a GSM and a 3G network.

In one embodiment of the invention there is provided a communications system comprising a MNO RAN and a private cell connected to the MNO RAN via a controlling node of the MNO RAN, the private cell having at least one radio node, the communications system further comprising a network component positioned intermediate the MNO RAN and the private cell, the network component comprising:
a RAN client module for communication with the controlling node of the MNO RAN;
a RAN server module for communication with and control of the radio node of the private cell;
a private mobile network module for the provision of local communication network services using the private cell; and
a service routing module in communication with the RAN client module, the RAN server module and the private mobile network module, the service routing module configured to evaluate a service request and thereafter route the service request through one of the local communications network and the MNO RAN; and
in which the private mobile network module comprises a mobile switching centre (MSC) component and a home location registry (HLR) component.

In one embodiment of the invention there is provided a communications system in which the MNO RAN is one of a GSM and a 3G network.

In one embodiment of the invention there is provided a communications system in which the operation of the network component is transparent to the MNO RAN.

In one embodiment of the invention there is provided a computer program product comprising program instructions for causing a computer, when loaded thereon, to implement the network component for providing mobile subscribers with both local services of a local communication network and public services of a MNO radio access network (RAN) using a private cell connected to the RAN according to any of the claims.

### Detailed Description of the Invention

The invention will now be more clearly understood from the following description of some embodiments thereof given by way of example only with reference to the accompanying drawings, in which:-
Figure 1 is a diagrammatic representation of a communication system incorporating the network component according to the invention;
Figure 2 is a diagrammatic representation of the network component illustrating its functional modules; and
Figure 3 is a diagrammatic representation of an alternative configuration of communication system according to the present invention

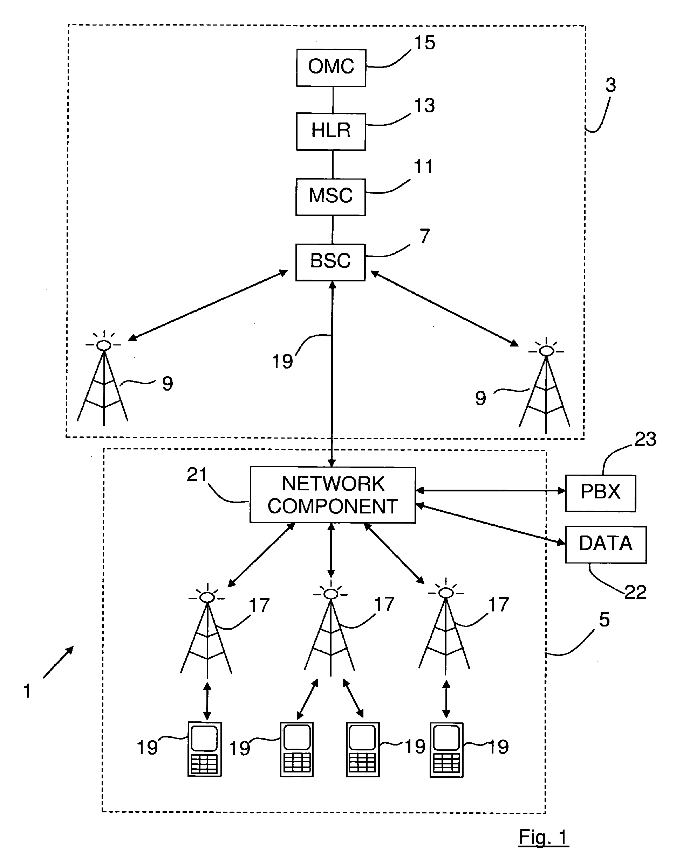

Referring to Figure 1, there is shown a communication system, indicated generally by the reference numeral 1, comprising a MNO radio access network (RAN) 3 and a private cell 5 connected to the RAN. The MNO RAN comprises a base station controller (BSC) / Radio Network Controller (RNC) 7, a plurality of radio nodes, in this case base transceiver stations (BTS) 9, a mobile switching centre (MSC) 11, a home location registry (HLR) 13 and an operation management controller (OMC) 15. The private cell 5 also comprises a plurality of radio nodes again, in this instance, BTSs 17. The communication system further comprises a plurality of mobile subscribers 19 all in communication with the local communication network and the MNO RAN and a network component 21 intermediate the BSC/RNC 7 and the BTSs 17. There is further provided a local communication network private branch exchange (PBX) 23 and a local communication network data system 22 accessible through the network component 21.

It will be understood by one skilled in the art that the MNO RAN will typically be more complex than the implementation shown and will include numerous other components. However, for reasons of simplicity and clarity, a simplified view of the network with a reduced number of components has been shown and will be sufficient for the skilled addressee to understand the invention.

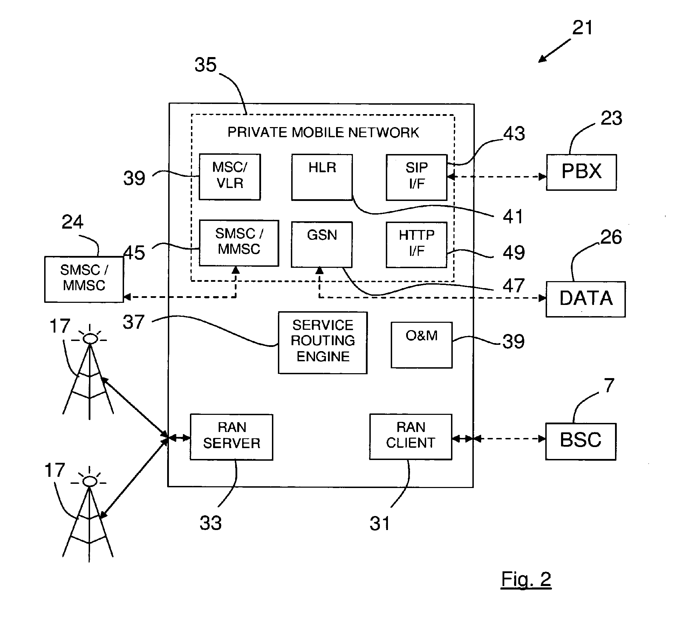

Referring to Figure 2, there is shown a diagrammatic representation of the network component 21 showing the functional modules of the network component in more detail. The network component 21 comprises a RAN client module 31, a RAN server module 33, a private mobile network module 35, a service routing engine 37 and an operations and management (O&M) module 39. The private mobile network module 35 further comprises an MSC 39, a HLR 41, a session invitation protocol (SIP) interface 43, a short messaging service centre / multimedia messaging service centre (SMSC/MMSC) 45, a GPRS serving node (GSN) 47 and a HTTP interface 49. The MSC 39 incorporates a visitor location registry (VLR).

The RAN client module 31 interfaces with a radio node, in this case a BSC 7 (or a RNC for a 3G system, but for the purposes of this description, reference will be made only to a BSC) of the RAN network while the RAN server module 33 manages the BTSs 17. The service routing engine 37 manages communications in the private network 5 in the manner described below. The SIP IF 43 provides access to a PBX 23. The SMSC 45 provides access to a local communication system messaging system 24 and the GSN 47 provides access to a local communication system data system 26.

In use, a mobile subscriber will be able to use their mobile device as part of the normal macro RAN network 3 in the usual manner. In one mode of operation, the private cell 5 acts as an extension of the MNO RAN so that mobile subscribers are able to access the MNO RAN through the private cell 5 in the known manner. The private cell 5 is typically one or more of a picocell and a femtocell installed within a building that provides access to the MNO RAN to mobile subscribers located inside the building. Once the mobile subscriber comes within the coverage area of the private cell 5, they are registered on the private cell 5 and a determination is made by the network component 21 whether or not the mobile subscriber is a registered user of the private cell 5. If the mobile subscriber is a registered user of the private cell, the private cell may operate in a second mode of operation, namely as a local communications network allowing the mobile subscriber avail of local communication network facilities such as local network voicemail, group calling and messaging, location lookup services, integration with local back office systems, local network call transfer and hold, communication routing through the PBX, being an extension of the local communications network, calling other extensions in the local communications network without requiring access through the MNO RAN, access to local data services and the like.

It will be understood that one advantageous aspect of the present invention is the ability of the network component 21 to operate a local communications network using the existing private cell infrastructure, namely the BTSs 17, the service routing engine 37, the network component MSC 39 and the network component HLR 41. If the mobile subscriber is a registered user of the private cell, the user will be permitted to use the local communications network for communications with others on the local communications network and for any special features accessible through the local communications network. This is achieved regardless of the state of the connection with the MNO RAN through the BSC 7. If the connection to the MNO RAN is unavailable, the network component according to the invention will still permit communications locally using the local communications network even for mobile subscribers. This is because the service routing engine 37, the RAN server 33 and the private mobile network 35 can assume control of the communications to and from the mobile subscribers device and can route calls to and from the mobile subscriber over the local communications network. This obviates one of the major obstacles of known solutions as the service is not dependent on a connection to the MNO RAN to operate. Supporting local services during transmission outage requires the ability to map a local subscriber's MSISDN to its IMSI. This mapping can be implemented by the network component 21 for a completely self-contained service or can be implemented by an external entity. In addition to voice calls, the provision of the SMSC and the GSN in the network component will allow for the provision of standalone messaging services and standalone data services respectively.

Furthermore, communications can also still be routed to and from the mobile subscriber's device through a local PBX and through a public switched telephone network (PSTN) if an alternative communication path to the PSTN is provided. In this way, the mobile subscriber can use their device to contact third parties outside the local communications network even when there is no communication link to the MNO RAN. Perhaps the most significant advantage of the present invention is the ability of the network component to guarantee a level of service to the registered users. This is a problem with the known solutions in that there is no way for the known solutions to discriminate between users of the picocell (or femtocell but hereinafter simply referred to as picocell) and prioritise one user's communications over another. If the network is saturated with traffic from some registered users and/or visitor users that have entered into the picocells coverage area, it may be impossible to send an urgent message or route communications to a certain mobile subscriber. It is clear how this could be unacceptable in many instances, such as for example in a hospital environment where it may be imperative that an emergency surgical team can be contacted at any time.

In order to achieve this, the network component has a HLR with a registered user access table with the priority status of each of the registered users. Certain users can be given VIP status so that if a service request is made relating to that VIP mobile subscriber, priority is given to their communications and other communications of non-VIP registered users can be dropped in preference to the communication of the VIP mobile subscriber. Similarly, visitors to the picocell can be given access to the picocell and their details are stored in the VLR of the MSC 39. If a communication service request is made on behalf of a registered user (a member of staff) or a VIP member (a member of the surgical team), the communication of the visitor can be dropped in favour of the registered user.

It will be understood that the call may be evaluated based on the highest priority level user currently on the call if the priority level of both call parties is known. For example, if an unregistered user has initiated a call to a VIP registered user and a registered user attempts to make a call when no communication channels are available, the unregistered user's call will not be disconnected as at least one of the parties on that call, in this case the called party (the VIP), has a status greater than or equal to the person wishing to make the call. Alternatively, only one of the parties on the call such as the calling party may be taken into consideration when considering whether or not to drop a call and allocate the channel to another calling or called party.

It can be seen that the present invention is implemented with the minimum of disruption to the operator and they do not have to provide extensive infrastructure and monitoring on the operator side, effectively a managed node, which are expensive to provide and manage. Instead, the overhead to the operator is very light. Communications on the local communication network between two registered users of the local communication system, whether mobile subscribers or fixed desk handset users, do not have to be routed through the MNO RAN thereby reducing traffic on the MNO RAN and reducing cost of transmission. Furthermore, the present invention allows for communication prioritization for registered users and communications even when the connection to the MNO RAN is unavailable. This is achieved without requiring special applications to be loaded onto the mobile handsets and without requiring additional radio interfaces.

For reasons of completeness, a brief description of each of the modules of the network component 21 will be provided below. It will be understood that not all of the modules described below and shown in Figure 2 need to be provided or indeed many or all of the modules could be provided but not all of the modules need to be implemented and the users can avail of those modules and services that they require, if and when they are needed.

### Service Routing Engine 37

The service routing engine 37 is the core module in the network component and can be dynamically defined by the operator of the network component. The service routing engine operates according to defined policy profiles which implement some of the common features. The policy language defines a set of rules which are applied to each network access attempt and operates by matching conditions with actions.

Matching conditions can be constructed based on supported criteria including for example: procedure type, International Mobile Subscriber Identity (IMSI), Mobile Subscriber Integrated Services Digital Network Number (MSISDN), IMEI, subscriber state, link state, subscriber level, packet header parameters for data procedures including destination addresses. In relation to procedure type, this will be a match of the type of procedure e.g. a location update, a voice call, a SMS, a supplementary service or the like. In relation to IMSI, this will be a match on the subscribers IMSI including a prefix match which can be used to identify individual subscribers or subscribers with a particular mobile country code or network code. In relation to the MSISDN, this will be a match on the called or calling number for voice calls and SMS. In relation to subscriber state, this will entail a match on whether the subscriber is registered, not registered or busy. In relation to the link state, this will determine the current status of external links such as the link to the MNO RAN/macro network or the local SIP PBX. Finally, the subscriber level will match the configured level of the subscriber which determines their priority for access to the network and includes levels such as VIP, normal, unknown (visitor) and the like. The matching conditions can be combined into more complex conditions using Boolean operators if desired.

It is envisaged that although in the embodiment described above only three distinct subscriber levels have been discussed in detail, VIP, normal and unknown, it is envisaged that more or less different subscriber levels may be used if desired. For example, there may be ten subscriber levels or states where subscriber state 1 represents an unknown or visitor and subscriber state 10 represents a VIP. Subscriber states 2 to 9 inclusive represent intermediate subscriber states with greater priority for access to the network the higher the subscriber state number.

Furthermore, it is envisaged that the different users could have different priority for access to the network depending on where they are located within an installation. For example, a maintenance person may be considered to have relatively low priority for coverage when he is located adjacent an operating theatre in a hospital. In the same location beside the operating theatre, a surgeon may have the highest priority access to the network. However, if the two same users are located in a boiler room, the roles may be reversed and the maintenance man may have the highest (or at least higher than normal) priority access to the network whereas the surgeon may have relatively low priority to access the network. These conditions may be implemented as rules and stored as part of a user's profile. What is important is that the system operator can define the profiles as they choose if required and effectively assign the levels of service that will be available to the users.

Once a matching rule has been found, the corresponding action is executed on the procedure. Common actions include Route <destination>, Duplicate <destination><result> and Reject [result]. Other common actions could be provided also. Route <destination> will route the procedure, e.g. a call or SMS to the provided destination interface. Valid destinations would include the local PBX 23 and the macro network. Duplicate <destination><result> would duplicate the procedure to the provided destination interfaces and the result of the procedure can be derived from any or all of the destinations. Reject [result] will reject the procedure and a specific result code can be given.

The actions can either return a status of "stop" or "continue". If the action returns "stop", then no further rules processing is performed. If "continue" is returned, then the policy engine continues traversing the rules list until it finds a matching rule with an action that returns "stop". At present the policy language is implemented in XML however this is not seen as limiting and other languages could be used to implement the policy language. Effectively, the service routing module transforms the RAN into a flexible service aware system and facilitates the sharing of local radio resources between the macro network and the local communications systems.

### RAN server 33

The RAN server module 33 terminates links with connected local base stations and acts as a network entity towards them. It can implement a full network side radio resource management function or can delegate most of the radio resource management functions to the macro network acting more in a pass through mode depending on the policy preference. The RAN server provides a plug-in interface along with individual plug-in modules providing support for various vendors' base station equipment. The RAN server can manage multiple vendor 2.75G picocells, 3G NodeBs as well as various femtocell products. When acting in a full radio resource management function, the RAN server module implements both internal and external handover, power control and directed retry as well as other known functions.

### RAN Client 31

The RAN client module 31 provides a link to the macro network. This allows for registration of local subscribers, the receipt of mobile terminating voice calls and SMS messages and handover interactions with the macro network. The RAN client can terminate all procedures with its controlling entity in the macro network or pass them on via the ABIS server to the BTS in a pass through mode. When terminating procedures, the resources active on the ABIS client do not need to have a one to one mapping with the corresponding resources on the ABIS server.

### Private Mobile Network 35

The private mobile network 35 has several modules that implement all the main functional elements of a mobile (in this case GSM) network. The private mobile network 35 implements a subset of the features normally available in these functional elements and focuses on the features that enhance the integration of the subscriber handsets with local services. These local private network elements operate transparently to their macro network equivalents.

### MSC/VLR 39

The MSC module implements the call switching function. It can also delegate the local call switching function to an external local PBX via the SIP interface 43. As well as supporting basic call switching, the MSC 39 also implements the supplementary services of call transfer and call forwarding and tracks the location of the user across the local cells. The MSC/VLR supports priority levels among subscribers, enabling higher levels of service to be delivered to users with higher priority. Priority levels include "visitor", an unregistered subscriber that is on the systems cell because of their proximity to the cell and a policy configuration which permits them access to the system, "authorized", a locally registered subscriber which would usually be permitted access to local services as well as the macro network services, and "VIP", a locally registered "VIP" who would normally be given priority access to the systems services. This would include dropping active calls for lower priority users ("visitor" and even "authorized" users) to facilitate the "VIP" communications.

### HLR/AUC 41

The Home Location Register (HLR) / Authentication Centre (AUC) module 41 implements a subscriber table where local subscribers can be registered. Subscribers can be assigned a level indicating their priority during times of congestion. Authentication and ciphering are supported for local subscribers by this module when the subscribers Ki is provided. It is worthwhile noting that authentication and ciphering can also be controlled by the macro network when connected in which case the Ki need not be locally stored. The system implements a handset based provisioning mode where subscribers can attach to the system and authenticate themselves using DTMF or SMS based authentication mechanisms. This mode is provided to simplify the task of provisioning subscribers obviating the need to access the O&M interface and matching subscribers to International Mobile Equipment Identity (IMEI) or IMSI on this interface.

### SMSC45

The SMSC module 45 operated in the network component can operate in a store and forward mode where messages are accepted and stored persistently for local users and then delivered as a second stage, or can operate in a real time mode where messages are delivered directly from sender to receiver with the message only accepted from the sender after delivery to the receiver. Messaging groups are supported where messages can be sent to a group MSISDN identifying the group and result in the SMS being sent individually to all group members. Message receipt acknowledgements are also supported as well as class 0 SMS (flash SMS messages). The SMSC module also supports interaction with back office systems through the HTTP interface. External HTTP applications can send or receive SMS messages through this interface. These applications are identified using configured MSISDN numbers. The SMS broadcast feature is also supported by the SMSC module and SMSC broadcasts are submitted through the HTTP module 49 by external applications. The SMSC also supports the sending of MMS messages between users and also between local communications systems and users.

### GSN 47

The GSN module 47 implements the local Serving GPRS Support Node (SGSN) and Gateway GPRS Serving/Support Node (GGSN) functions. It implements the server side of the Gb interface and also the Gi interface where user traffic can be routed to a local destination. The local GSN can be selected for use based on various criteria including the status of the transmission link back to the macro network.

The GSN module 47 implements a set of features for narrow and expensive transmission links with poor delay and jitter characteristics, these transmission links being primarily packet based satellite links. These features include traffic acceleration, local caching of content and local breakout of data. All of these features are implemented without affecting billing for the data service. These features also require a network component element to be placed in the macro network on the other side of the backhaul transmission link. For office environments with normal broadband connections to the macro network, these features will usually be disabled as they are generally not required in those instances. The GSN module 47 operation is transparent to the network and is not configured in the operator's network as a known SGSN or GGSN.

### SIP Interface module 43

The SIP interface module 43 allows integration with local communication systems. It can operate in SIP trunk or SIP client mode. SIP client mode provides a much higher level of functionality, while SIP trunk is generally more cost effective with regard to PBX license fees and is a useful option for routing SIP calls to a VOIP/fixed operator. The SIP client interface supports call transfer and call forwarding and maps the mobile handset behaviour to that of a SIP based desk phone. User state notifications are published from the network element for each client allowing status lamps on feature phones to track the state of the users. Some useful events published include the subscriber's registration state (whether or not they are on the premises), the subscriber's busy status and the subscriber's location. The user state on the macro network interface is also published using these SIP notifications meaning that a receptionist feature phone can also show a busy lamp light for a user when they receive a call on their macro number.

### HTTP interface module 49

The HTTP interface module 49 facilitates integration with back office applications. It allows these external applications to send messages to local subscribers. It also facilitates users sending messages to the applications. Furthermore, the HTTP interface also allows system events to be posted to external applications, for example an incoming voice call can trigger an external HTTP event.

### O&M module 39

The O&M module 39 is responsible for configuration, fault reporting, accounting, performance monitoring and security in the system. It supports both a local management interface which is HTTP based and a remote management capability. When using the RAN client module to the macro network, much of the GSM and cell configuration information can be extracted from this interface. This would normally be via a 12.21 interface or some other vendor specific management protocol. The local or remote management configuration can be used to override the settings received by the macro network if required. The local management interface is available on the HTTP interface of the platform. It can be used to configure the network component parameters if required and supports various user access levels. Only operator level accounts can access GSM and service routing parameters. Subscriber management tasks can be completed through the HTTP interface or many of these tasks can be completed through the mobile subscriber handset using an interactive voice response system with which the user can interact using DTMF digits on the handset keypad. Similarly, SMS based subscriber management can also be supported if desired.

The present invention is provided with a number of predefined behaviour profiles which are based on operator requirements. Additional profiles can be defined using the network components policy module to cater for specific operator preferences. The first mode of operation of the profile is "Fail over to Private Mobile Network on transmission outage". With this mode of operation, the network component's responsibility is solely to maintain a local service during a failure of the transmission link. It does not interfere under normal circumstances, remaining dormant until a problem with the transmission link is detected. When a problem is detected it can then support a local voice, messaging and data service until the failure is remedied. This functionality also covers failure of the BSC (in a 2G implementation) itself.

The network component has the capability to act as a complete Private Mobile Network and can support the local service internally given the MSISDNs of the local users. Alternatively, it can offload some or all of the services to an external system via its external SIP / HTTP interfaces. The recommended configuration is to run the network component in line between the BTS and BSC. This allows the network component to isolate a disconnect/connect event on either side from the peer - e.g. if the connection to the BSC drops, the network component can maintain the connection to the BTS without service interruption for local users. Handover scenarios between the local and macro cells behave as it normally would between macro network cells. The network component does not become involved in these hand overs when the ABIS link is available and acts largely as a pass through for all signalling. Supporting local services during transmission outage requires the ability to map a local subscriber's MSISDN to its IMSI. This mapping can be implemented inside the network component for a completely self-contained service or can be implemented by an external entity.

The network component monitors the link to the BSC regularly using heartbeat primitives. Once a problem is detected, the network component transitions to active mode where it provides a full communications service to local users during the outage. An SMS broadcast is supported on the attached cells to notify local users of the impaired level of service non-intrusively.

Active voice calls between local users (whose number mapping has been provisioned) can be maintained on failure of the transmission link to the BSC. The network component monitors all voice calls active in the system and is already aware of which calls are local before the failure, although it does not act on this information up to this point. When the BSC transmission link is judged to be down by the network component, it modifies the media streams for active local calls routing them locally instead of via the failed BSC transmission link. These calls may experience a period without audio up to the time taken to detect the failure of the BSC connection. New local call set ups are completed by the network component. Calls to external parties can be routed over the network component SIP interface to a backup communications service if available.

SMS messages can also be delivered locally during the transmission outage period. In failover mode, the network component does not handle messages using its store and forward capability but instead delivers messages in a real time fashion. This means that an SMS will be delivered synchronously from sender to receiver before the sender is sent an acknowledgement. The system behaves like this to ensure that messages to local users do not remain in the local SMSC when the destination user is not currently on site. Calls created locally will not have the potential to handover to the macro network when the user leaves the local area of coverage. This is because no call exists in the macro network at this point and the connection to the macro network is unavailable. Local calls will drop if the user leaves the local area while active on the call.

The network component provides a local network service during a transmission outage to the BSC. During this period it will constantly retry the connection to the BSC in an attempt to resume the macro network service. Once the connection to BSC has been restored, the network component will begin the transition back to network mode.

It will maintain local voice calls which were created during the outage as long as possible. Should the BSC activate a voice channel which is in use for one of these local calls, the local call will be transferred to another free channel via an intra cell handover. The local call may be the BSC attempts to use all the available voice channels, then the local call can either be dropped in preference to the external call or the external call may be refused by the system, depending on the operator preference. Once all locally created calls have been disconnected by the users, the system will be back in full pass-through mode and remain dormant until the next ABIS transmission outage is detected.

The network component can forward all call and SMS attempts during an ABIS transmission outage via SIP to an external switch. The responsibility for mapping called numbers is with this external switch in this case. It would typically be located in the operator's network and be reachable over a backup communications link from the local site such as a broadband link to the public internet. The network component will also process incoming SIP procedures from this switch when the ABIS transmission link is down. Subscribers are identified on this SIP interface using the IMSI. SMS messages are supported using the SIP MESSAGE primitive.

The second profile is the "Full Integration with local systems" profile. According to this profile, as an operator preference, the network component can fully integrate local subscribers with local communications systems including the local PBX. In this mode, the network component can manage local resources to deliver local services without the involvement of the BSC. The resources used to deliver these local services can draw from currently unused resources from the pool controlled by the BSC or alternatively additional resources can be made available locally that are not available to the BSC. This could mean whole additional local transceivers/cells managed by the network component or could be individual logical channels of existing transceivers which are administratively locked on the BSC, but used locally by the network component.

This profile may be useful for operators with a fixed network in addition to their mobile network. The SIP PBX can be configured with trunks to the fixed network. Free calling plans between users on site can now be provided by the operator without incurring the costs associated with running these calls through their mobile / fixed core networks. The mobile handsets become true PBX extensions when on the premises. They will be reachable here on the geographic number and mobile number all through the mobile handset.

When the network component uses resources also available for use by the BSC, it separates the concept of actual resources on the local transceivers from the resources managed by the BSC. In practice this means that when a BSC activates a particular channel on the ABIS interface, the actual channel activated by the network component on the local transceiver may be a different channel from that requested. The channel type and codec requested by the BSC will be matched with the actual resource allocated. This separation is implemented to allow unused resources to be utilised locally without a requirement for repeated intra cell handover when the BSC decides to use a channel already in use locally.

This scheme is largely transparent in its operation from the BSC's perspective with the exception that handover in from macro cells to local cells is more difficult. Handover out from local cells to macro cells of macro network calls is not affected, and local handover of calls between local cells is managed completely internally by the network component without the need to involve the BSC. With handover in, the actual channel allocated by the network component needs to match the channel requested by the BSC. This may result in an internal handover being necessary in this case within the network component to free the requested channel for use. This can be simplified by disabling handover in to local cells from macro cells where coverage is not an issue. In this case local cells would be included for cell re-selection only and mobiles entering the local area would remain on the macro cell until call hang-up and then would quickly camp on a local cell.

In the case that local coverage is an issue, handover in may be required. The network component will track the resource allocation pattern of the BSC and allocate resources for local use based on those that will be allocated latest by the BSC. This minimises the amount of internal handover required for local calls to support handover in scenarios for macro cells.

All originating calls made by locally registered subscriber through the local cells may be routed through the PBX. Calls from unregistered subscribers are routed to the macro network as normal. Incoming calls from the macro network are support to both registered and unregistered users. SMSs are routed locally between locally registered subscribers where possible. Otherwise, SMS messages are sent via the macro network interface.

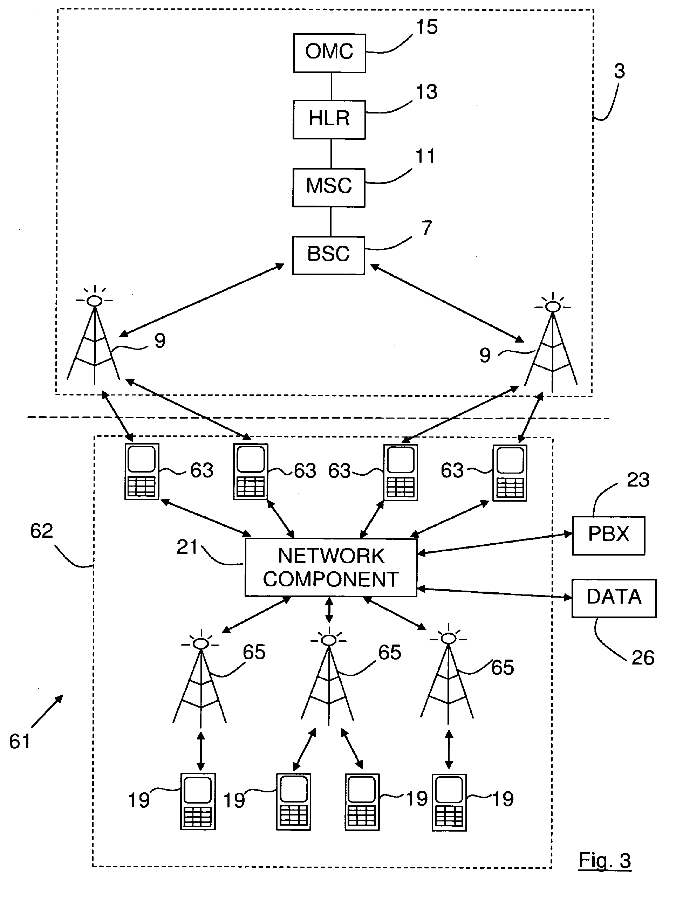

Referring to Figure 3 of the drawings, there is shown an alternative embodiment of communication network according to the present invention, in which like parts have been given the same reference numeral as before, indicated generally by the reference numeral 61. The communication network 61 comprises a private mobile network 62 having a plurality of communication unit proxies 63. The communication unit proxies 63 are typically fixed units forming part of the system and permit communications to pass there-through to and from the MNO RAN 3 and the mobile subscribers 19. The private mobile network 62 further comprises a plurality of radio nodes 65 in communication with a plurality of mobile subscribers 19.

In use, if a mobile subscriber 19 wishes to place a call to another mobile subscriber 19 that call can be routed by the network component 21 internal the private mobile network 62 and does not have to be routed through the MNO RAN 3. If however, there is a service request to be fulfilled between one of the mobile subscribers 19 a third party (not shown) that must be routed over the public RAN, a communication channel is set up between one of the communication unit proxies 63 and the third party over the MNO's mobile network 3. The communication channel with the communication unit proxy 63 is routed internally in the private mobile network from that communication unit proxy 63 to the appropriate mobile subscriber 19. The creation and subsequent destruction of the communication link between the communication unit proxy 63 and the third party, and the communication unit proxy 63 and the mobile subscriber 19 are facilitated by the network component 21.

In the embodiment described with reference to Figure 3, it will be understood that the radio nodes 65 do not form a direct part of the MNO's network and therefore the radio nodes 65 do not have to be recognised or addressed by the MNO network. As far as the MNO network is concerned, they are providing a communication channel to and from a communication unit proxy 63. The network component 21 routes the communications to and from the mobile subscribers 19 and the communication network proxies 63 without recourse to the MNO. In this way, the present invention may be implemented without the MNO's intervention.

Throughout the specification, reference is made to a "radio" network. It will be understood that "radio" network is intended to cover 2G, 3G and other radio networks used for mobile communications. The invention has been described predominantly with reference to a GSM network which is typically understood to be a 2-2.75G radio network however it will be understood that this is for illustrative purposes only and the invention is in no way limited to use in only a GSM radio network.

In this specification, the terms "radio node" and "controller node" have been used throughout. It will be understood by one of skill in the art that, depending on the radio network in question, these terms will refer to different pieces of equipment. In a 2G network, a "radio node" will typically be understood to be a Base Transceiver Station (BTS) whereas in a 3G network, the term "radio node" will be understood to mean a NodeB. In a 2G network, a "controller node" will typically be understood to be a Base Station Controller (BSC) whereas in a 3G network, the term "controller node" will be understood to mean a Radio Network Controller (RNC). The terms "radio node" and "controller node" will also refer to equipment in 4G and beyond radio networks that perform the same functionality as the BTS and BSC respectively in the 2G network and the NodeB and the RNC respectively in the 3G network.

It will be understood that the network component according to the present invention will be performed largely in software and therefore the present invention extends also to computer programs, on or in a carrier, comprising program instructions for causing a computer to implement the network component and its function. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on two, three or more machines with certain parts of the invention being performed by one machine and other parts of the invention being performed by another device. The devices may be part of a LAN, WLAN or could be connected together over a communications network including but not limited to the internet. Many of the modules could be performed "in the cloud", meaning that remotely located processing power may be utilised to implement certain modules of the present invention. Accordingly, it will be understood that many of the modules may be located remotely, by which it is meant that the modules could be located either on a separate machine in the same locality or jurisdiction or indeed on a separate machine or machines in one or several remote jurisdictions. The present invention and claims are intended to also cover those instances where the network component and the processing steps are performed across two or more machines or pieces of apparatus located in one or more jurisdictions and those situations where the parts of the system are spread out over one or more jurisdictions.

In this specification, calls may be given priority based on the intended recipient or based on the calling entity. Other criteria may be used when deciding whether or not to route a call through the system and whether or not to give that call priority including but not limited to the called number, the calling number, the IMSI, whether the number is a local number or not, the link status to the MNO, the link status to the local communication system and the like. Similarly, various criteria may be used when deciding how to route a call to a user, i.e. through the local communication network or through the MNO RAN. These criteria include but are not limited to the calling number, the called number, the IMSI, the IMEI (or indeed a subset of any of the above), the mobile subscribers priority level, the current attachment status of the mobile subscriber (whether or not the mobile subscriber is currently on site), whether or not the mobile subscriber is a local registered subscriber, the TCP/IP header fields of the communication request, the subscriber location (as in which local cell the subscriber is currently on), the subscriber data such as call forwarding status and any other like criteria that may be used to route the communications through the appropriate communication network.

Throughout the specification, reference has been made to routing a call. It will be understood that routing will not only mean directing the call through either the local communication network or the MNO RAN but routing can also mean other actions taken to handle a call, message or data. For example, routing may also mean rejecting a procedure. In some circumstances, for example when the local communication network is reaching or at capacity, a decision may be taken to reject a communication request made to or from a non-registered user or a low priority registered user to keep the resource available for higher priority communications. This action is considered to be routing. Similarly, routing may also be duplicating a call procedure to both the local communication network and the MNO RAN or dropping an existing call in preference of a communication request to or from a higher priority user.

In this specification the terms "comprise, comprises, comprised and comprising" and the terms "include, includes, included and including" are all deemed totally interchangeable and should be afforded the widest possible interpretation.

The invention is in no way limited to the embodiment hereinbefore described but may be varied in both construction and detail within the scope of the subject-matter of the appended claims.

## Claims

1. A method of operating a communication network (1) comprising a Mobile Network Operator (MNO) Radio Access Network (RAN) (3), a private cell (5), a local communication network (23), and a network component (21) intermediate the MNO RAN, the private cell and the local communication network, **characterised in that** the method comprising the steps of:
the network component (21) assuming control of a broadcast channel of the private cell;
the network component (21) controlling any dedicated channel set up using the private cell (5) including routing any communications on the dedicated channel to one of the local communication network (23) and the MNO RAN (3);
the network component (21) checking whether a communication service request is to or from a registered user of the local communication network (23);
the network component (21) routing the service request accordingly depending on whether the service request is to or from a registered user; and in which on the network component (21) determining that the communication service request is to or from a registered user of the local communication network (23) and there are no available channels for routing the communication service request to or from the registered user, the network component (21) carries out the steps of:
selecting a communication channel currently in use by a non-registered user;
disconnecting the communication channel of the non-registered user; and
fulfilling the communication service request of the registered user over that communication channel.

2. A method of operating a communication network (1) as claimed in claim 1 in which if the communication service request is to or from a registered user, the network component (21) checks the profile of the registered user and thereafter routes the service request accordingly.

3. A method of operating a communication network (1) as claimed in claim 2 in which on the network component (21) determining from the profile of the registered user that the registered user is a VIP user of the communication network and there are no available channels for routing the communication service request to or from the VIP registered user, the network component (21) carries out the steps of:
selecting a communication channel currently in use by one of a non-registered user or a non-VIP registered user;
disconnecting the communication channel of the non-registered user or the non-VIP registered user; and
fulfilling the communication service request of the VIP registered user over that communication channel.

4. A method of operating a communication network (1) as claimed in any preceding claim in which the network component (21) checks the status of a link to the MNO RAN (3) and thereafter routes a communication service request accordingly.

5. A method of operating a communication network (1) as claimed in any preceding claim in which the network component (21) checks the status of a link to the local communication system and thereafter routes a communication service request accordingly.

6. A method of operating a communication network (1) as claimed in any preceding claim in which the network component (21) checks the called number and thereafter routes a communication service request accordingly.

7. A method of operating a communication network (1) as claimed in any preceding claim in which the network component (21) checks the calling number and thereafter routes a communication request accordingly.

8. A method of operating a communication network (1) as claimed in any preceding claim in which the network component (21) checks the IMSI of a device making or receiving a communication request and thereafter routes the communication request accordingly.

9. A method of operating a communication network (1) as claimed in claims 6 to 8 in which the network component (21) performs a match on part of one of the called number, the calling number and the IMSI and thereafter routes the communication request accordingly.

10. A method of operating a communication network (1) as claimed in any preceding claim in which the network component (21) checks whether the called number or the calling number is a local number and thereafter routes a communication request accordingly.

11. A method of operating a communication network (1) as claimed in any preceding claim in which the network component (21) checks a current attachment status of the subscriber and routes a communication request accordingly.

12. A method of operating a communication network (1) as claimed in any preceding claim in which the network component (21) checks whether the subscriber is a local registered subscriber and routes a communication request accordingly.

13. A method of operating a communication network (1) as claimed in any preceding claim in which the network component (21) checks a priority level of the subscriber and routes a communication request accordingly.

14. A method of operating a communication network (1) as claimed in any preceding claim in which the network component (21) checks a TCP/IP header field and routes a communication request accordingly.

15. A method of operating a communication network (1) as claimed in any preceding claim in which the network component (21) checks an IMEI or a subset of the IMEI of a device making or receiving a communication request and routes the communication request accordingly.

16. A method of operating a communication network (1) as claimed in any preceding claim in which the network component (21) checks the current location of a subscriber and routes a communication request accordingly.

17. A method of operating a communication network (1) as claimed in any preceding claim in which the network component (21) checks subscriber data and routes a communication request accordingly.

## Patentansprüche

1. Verfahren zum Betreiben eines Kommunikationsnetzes (1), das ein MNO-(Mobile Network Operator)-RAN (Radio Access Network) (3), eine private Zelle (5), ein lokales Kommunikationsnetz (23) und eine Netzwerkkomponente (21) zwischen dem MNO RAN, der privaten Zelle und dem lokalen Kommunikationsnetz umfasst, **dadurch gekennzeichnet, dass** das Verfahren die folgenden Schritte beinhaltet:
Übernehmen der Kontrolle über einen Broadcast-Kanal der privaten Zelle durch die Netzwerkkomponente (21);
Steuern eines dedizierten Kanal-Setup mittels der privaten Zelle (5), durch die Netzwerkkomponente (21), einschließlich des Leitens von Kommunikationen auf dem dedizierten Kanal zu dem lokalen Kommunikationsnetz (23) oder dem MNO RAN (3);
Prüfen, durch die Netzwerkkomponente (21), ob eine Kommunikationsdiensteanforderung von einem registrierten Benutzer des lokalen Kommunikationsnetzes (23) kommt oder dorthin geht;
entsprechendes Leiten, durch die Netzwerkkomponente (21), der Diensteanforderung je nachdem, ob die Diensteanforderung zu einem registrierten Benutzer geht oder von einem solchen kommt; und wobei die Netzwerkkomponente (21), wenn sie feststellt, dass die Kommunikationsdiensteanforderung zu einem registrierten Benutzer des lokalen Kommunikationsnetzes (23) geht oder von einem solchen kommt und keine Kanäle zum Leiten der Kommunikationsdiensteanforderung zu oder von dem registrierten Benutzer vorhanden sind, die folgenden Schritte ausführt:
Auswählen eines Kommunikationskanals, der aktuell von einem nicht registrierten Benutzer benutzt wird;
Abtrennen des Kommunikationskanals des nicht registrierten Benutzers; und
Erfüllen der Kommunikationsdiensteanforderung des registrierten Benutzers über diesen Kommunikationskanal.

2. Verfahren zum Betreiben eines Kommunikationsnetzes (1) nach Anspruch 1, bei dem die Netzwerkkomponente (21), wenn die Kommunikationsdiensteanforderung zu einem registrierten Benutzer geht oder davon kommt, das Profil des registrierten Benutzers prüft und danach die Diensteanforderung entsprechend leitet.

3. Verfahren zum Betreiben eines Kommunikationsnetzes (1) nach Anspruch 2, bei dem die Netzwerkkomponente (21), wenn sie anhand des Profils des registrierten Benutzers feststellt, dass der registrierte Benutzer ein VIP-Benutzer des Kommunikationsnetzes ist und keine Kanäle zum Leiten der Kommunikationsdienstanforderung zu oder von dem registrierten VIP-Benutzer vorhanden sind, die folgenden Schritte ausführt:
Auswählen eines Kommunikationskanals, der aktuell von einem nicht registrierten Benutzer oder einem nicht VIP-registrierten Benutzer benutzt wird;
Abtrennen des Kommunikationskanals des nicht registrierten Benutzers oder des nicht VIP-registrierten Benutzers; und
Erfüllen der Kommunikationsdiensteanforderung des VIP-registrierten Benutzers über diesen Kommunikationskanal.

4. Verfahren zum Betreiben eines Kommunikationsnetzes (1) nach einem vorherigen Anspruch, wobei die Netzwerkkomponente (21) den Status einer Link zu dem MNO RAN (3) prüft und danach eine Kommunikationsdiensteanforderung entsprechend leitet.

5. Verfahren zum Betreiben eines Kommunikationsnetzes (1) nach einem vorherigen Anspruch, wobei die Netzwerkkomponente (21) den Status einer Link zu dem lokalen Kommunikationssystem prüft und danach eine Kommunikationsdienstanforderung entsprechend leitet.

6. Verfahren zum Betreiben eines Kommunikationsnetzes (1) nach einem vorherigen Anspruch, bei dem die Netzwerkkomponente (21) die angerufene Nummer prüft und danach eine Kommunikationsdiensteanforderung entsprechend leitet.

7. Verfahren zum Betreiben eines Kommunikationsnetzes (1) nach einem vorherigen Anspruch, bei dem die Netzwerkkomponente (21) die anrufende Nummer prüft und danach eine Kommunikationsanforderung entsprechend leitet.

8. Verfahren zum Betreiben eines Kommunikationsnetzes (1) nach einem vorherigen Anspruch, bei dem die Netzwerkkomponente (21) die IMSI eines eine Kommunikationsanforderung aussendenden oder empfangenden Geräts prüft und danach die Kommunikationsanforderung entsprechend leitet.

9. Verfahren zum Betreiben eines Kommunikationsnetzes (1) nach den Ansprüchen 6 bis 8, bei dem die Netzwerkkomponente (21) einen Vergleich an einem Teil von einem aus angerufener Nummer, anrufender Nummer und IMSI ausführt und danach die Kommunikationsanforderung entsprechend leitet.

10. Verfahren zum Betreiben eines Kommunikationsnetzes (1) nach einem vorherigen Anspruch, wobei die Netzwerkkomponente (21) prüft, ob die angerufene Nummer oder die anrufende Nummer eine lokale Nummer ist, und danach eine Kommunikationsanforderung entsprechend leitet.

11. Verfahren zum Betreiben eines Kommunikationsnetzes (1) nach einem vorherigen Anspruch, wobei die Netzwerkkomponente (21) einen aktuellen Anhangstatus des Teilnehmers prüft und eine Kommunikationsanforderung entsprechend leitet.

12. Verfahren zum Betreiben eines Kommunikationsnetzes (1) nach einem vorherigen Anspruch, wobei die Netzwerkkomponente (21) prüft, ob der Teilnehmer ein lokaler registrierter Teilnehmer ist, und eine Kommunikationsanforderung entsprechend leitet.

13. Verfahren zum Betreiben eines Kommunikationsnetzes (1) nach einem vorherigen Anspruch, wobei die Netzwerkkomponente (21) eine Prioritätsstufe des Teilnehmers prüft und eine Kommunikationsanforderung entsprechend leitet.

14. Verfahren zum Betreiben eines Kommunikationsnetzes (1) nach einem vorherigen Anspruch, wobei die Netzwerkkomponente (21) ein TCP/IP-Header-Feld prüft und eine Kommunikationsanforderung entsprechend leitet.

15. Verfahren zum Betreiben eines Kommunikationsnetzes (1) nach einem vorherigen Anspruch, wobei die Netzwerkkomponente (21) eine IMEI oder einen Teilsatz der IMEI eines eine Kommunikationsanforderung sendenden oder empfangenden Gerätes prüft und die Kommunikationsanforderung entsprechend leitet.

16. Verfahren zum Betreiben eines Kommunikationsnetzes (1) nach einem vorherigen Anspruch, wobei die Netzwerkkomponente (21) den aktuellen Ort eines Teilnehmers prüft und eine Kommunikationsanforderung entsprechend leitet.

17. Verfahren zum Betreiben eines Kommunikationsnetzes (1) nach einem vorherigen Anspruch, wobei die Netzwerkkomponente (21) Teilnehmerdaten prüft und eine Kommunikationsanforderung entsprechend leitet.

## Revendications

1. Un procédé d'exploitation d'un réseau de communication (1) comprenant un réseau d'accès radio (RAN) d'opérateur de réseau mobile (MNO) (3), une cellule privée (5), un réseau de communication local (23) et un composant de réseau (21) placé entre le RAN MNO, la cellule privée et le réseau de communication local, **caractérisé en ce que** le procédé comprend les opérations suivantes :
la prise de commande par le composant de réseau (21) d'un canal de radiodiffusion de la cellule privée,
la commande par le composant de réseau (21) de tout canal dédié établi au moyen de la cellule privée (5) comprenant l'acheminement de toutes communications sur le canal dédié vers un réseau parmi le réseau de communication local (23) et le RAN MNO (3),
la vérification par le composant de réseau (21) si une demande de service de communication est vers ou à partir d'un utilisateur enregistré du réseau de communication local (23),
l'acheminement par le composant de réseau (21) de la demande de service en conséquence selon que la demande de service est vers ou à partir d'un utilisateur enregistré, et où, lorsque le composant de réseau (21) détermine que la demande de service de communication est vers ou à partir d'un utilisateur enregistré du réseau de communication local (23) et qu'il n'y a aucun canal disponible pour l'acheminement de la demande de service de communication vers ou à partir de l'utilisateur enregistré, le composant de réseau (21) exécute les opérations suivantes :
la sélection d'un canal de communication actuellement en utilisation par un utilisateur non enregistré,
la déconnexion du canal de communication de l'utilisateur non enregistré, et
l'exécution de la demande de service de communication de l'utilisateur enregistré par l'intermédiaire de ce canal de communication.

2. Un procédé d'exploitation d'un réseau de communication (1) selon la Revendication 1 dans lequel, si la demande de service de communication est vers ou à partir d'un utilisateur enregistré, le composant de réseau (21) vérifie le profil de l'utilisateur enregistré et ensuite achemine la demande de service en conséquence.

3. Un procédé d'exploitation d'un réseau de communication (1) selon la Revendication 2 dans lequel, lorsque le composant de réseau (21) détermine, à partir du profil de l'utilisateur enregistré, que l'utilisateur enregistré est un utilisateur VIP du réseau de communication et qu'il n'y a aucun canal disponible pour l'acheminement de la demande de service de communication vers ou à partir de l'utilisateur VIP enregistré, le composant de réseau (21) exécute les opérations suivantes :
la sélection d'un canal de communication actuellement en utilisation par un utilisateur parmi un utilisateur non enregistré ou un utilisateur non VIP enregistré,
la déconnexion du canal de communication de l'utilisateur non enregistré ou de l'utilisateur non VIP enregistré, et
l'exécution de la demande de service de communication de l'utilisateur VIP enregistré par l'intermédiaire de ce canal de communication.

4. Un procédé d'exploitation d'un réseau de communication (1) selon l'une quelconque des Revendications précédentes dans lequel le composant de réseau (21) vérifie le statut d'une liaison vers le RAN MNO (3) et ensuite achemine une demande de service de communication en conséquence.

5. Un procédé d'exploitation d'un réseau de communication (1) selon l'une quelconque des Revendications précédentes dans lequel le composant de réseau (21) vérifie le statut d'une liaison vers le système de communication local et ensuite achemine une demande de service de communication en conséquence.

6. Un procédé d'exploitation d'un réseau de communication (1) selon l'une quelconque des Revendications précédentes dans lequel le composant de réseau (21) vérifie le numéro appelé et ensuite achemine une demande de service de communication en conséquence.

7. Un procédé d'exploitation d'un réseau de communication (1) selon l'une quelconque des Revendications précédentes dans lequel le composant de réseau (21) vérifie le numéro appelant et ensuite achemine une demande de communication en conséquence.

8. Un procédé d'exploitation d'un réseau de communication (1) selon l'une quelconque des Revendications précédentes dans lequel le composant de réseau (21) vérifie l'identité IMSI d'un dispositif effectuant ou recevant une demande de communication et ensuite achemine la demande de communication en conséquence.

9. Un procédé d'exploitation d'un réseau de communication (1) selon les Revendications 6 à 8 dans lequel le composant de réseau (21) exécute un appariement sur une partie d'un élément parmi le numéro appelé, le numéro appelant et l'identité IMSI, et ensuite achemine la demande de communication en conséquence.

10. Un procédé d'exploitation d'un réseau de communication (1) selon l'une quelconque des Revendications précédentes dans lequel le composant de réseau (21) vérifie si le numéro appelé ou le numéro appelant est un numéro local et ensuite achemine une demande de communication en conséquence.

11. Un procédé d'exploitation d'un réseau de communication (1) selon l'une quelconque des Revendications précédentes dans lequel le composant de réseau (21) vérifie un statut de raccordement actuel de l'abonné et achemine une demande de communication en conséquence.

12. Un procédé d'exploitation d'un réseau de communication (1) selon l'une quelconque des Revendications précédentes dans lequel le composant de réseau (21) vérifie si l'abonné est un abonné enregistré local et achemine une demande de communication en conséquence.

13. Un procédé d'exploitation d'un réseau de communication (1) selon l'une quelconque des Revendications précédentes dans lequel le composant de réseau (21) vérifie un niveau de priorité de l'abonné et achemine une demande de communication en conséquence.

14. Un procédé d'exploitation d'un réseau de communication (1) selon l'une quelconque des Revendications précédentes dans lequel le composant de réseau (21) vérifie un champ d'entête TCP/IP et achemine une demande de communication en conséquence.

15. Un procédé d'exploitation d'un réseau de communication (1) selon l'une quelconque des Revendications précédentes dans lequel le composant de réseau (21) vérifie une identité IMEI ou un sous-ensemble de l'identité IMEI d'un dispositif effectuant ou recevant une demande de communication et achemine la demande de communication en conséquence.

16. Un procédé d'exploitation d'un réseau de communication (1) selon l'une quelconque des Revendications précédentes dans lequel le composant de réseau (21) vérifie l'emplacement actuel d'un abonné et achemine une demande de communication en conséquence.

17. Un procédé d'exploitation d'un réseau de communication (1) selon l'une quelconque des Revendications précédentes dans lequel le composant de réseau (21) vérifie des données d'abonné et achemine une demande de communication en conséquence.
